# EUROPÄISCHE PATENTSCHRIFT

(11) **EP 0 671 637 B1**
(45) Veröffentlichungstag und Bekanntmachung des Hinweises auf die Patenterteilung: **24.06.1998**
(21) Anmeldenummer: 95890041.7
(22) Anmeldetag: 28.02.1995
(51) Int. Cl.: G01T 1/00

(54) **Verfahren zur Ermittlung der Strahlenbelastung in Flugzeugen**
Method for measuring the radiation dose in airplanes
Dispositif pour déterminer les irradiations dans des avions

(30) Priorität: 01.03.1994 AT 425/94
(43) Veröffentlichungstag der Anmeldung: 13.09.1995
(73) Patentinhaber: Österreichisches Forschungszentrum Seibersdorf Ges.m.b.H., 1010 Wien (AT)
(72) Erfinder: Duftschmid, Klaus, Dr., A-2352 Gumpoldskirchen (AT); Schmitzer, Christian, Dr., A-2345 Brunn/Gebirge (AT); Strachotinsky, Christian, A-1010 Wien (AT)

(56) Entgegenhaltungen:
- EP-A- 0 524 367
- DD-A- 242 494
- DD-A- 244 642
- DD-A- 299 770
- DD-A- 301 581
- DE-A- 4 012 169
- US-A- 3 450 878

## Beschreibung

Die Erfindung betrifft ein Verfahren gemäß dem Oberbegriff des Patentanspruches 1. Ferner betrifft die Erfindung eine Anordnung gemäß dem Oberbegriff des Patentanspruches 4.

Mit zunehmender mittlerer Flughöhe beim Einsatz von modernen Flugzeugen ist das Problem der Strahlenbelastung der Passagiere und insbesondere der Besatzung durch die Höhenstrahlung nicht mehr zu vernachlässigen. Insbesondere stellt eine neue Empfehlung der internationalen Strahlenschutzkommission (ICRP 60) fest, daß die natürliche Strahlenbelastung während des Fluges in Verkehrsflugzeugen in die berufliche Strahlenbelastung des Flugpersonals einzurechnen ist. Beachtlich ist es jedoch auch, daß Militärflugzeuge in immer größeren Höhen fliegen und die auftretende Strahlungsbelastung beträchtlich zunimmt. Aufgrund der Neubewertung der Qualitäts-(Anteils)-Faktoren für Neutronenstrahlung wird überdies der Beitrag dieser Strahlungskomponente zur gesamten Äquivalentdosis die durch die gesamte auftretende Strahlung bedingt wird, gegenüber dem bisherigen Wert erhöht, so daß dieser Wert nun etwa drei Viertel der Gesamtdosis ausmacht.

Während die durchschnittliche jährliche Strahlenbelastung der Gesamtbevölkerung einschließlich strahlenexponierte Personen bei ca. 2 mSv/Jahr liegt, kann diese Belastung für Flugpersonal bis zu 10 mSv/Jahr erreichen. In den letzten Jahren wurden aufwendige Messungen der Exposition in Verkehrsflugzeugen durchgeführt, sodaß man davon ausgehen kann, daß ausreichend gesicherte Daten über die tatsächliche Strahlenbelastung vorliegen.

Die kosmische Strahlung in Reiseflughöhe besteht insbesondere aus Teilchenstrahlung und Protonen, wobei der galaktische Anteil der Höhenstrahlung weitgehend (85%) durch eine Primärstrahlung aus Protonen verursacht wird, die im intergalaktischen Raum entstehen. Die Flußdichte der galaktischen Teilchenstrahlung, die auf die Erdatmosphäre auftritt, ändert sich zeitlich entgegengesetzt zum 11-jährigen Zyklus der Sonnenaktivität, da die geladenen Teilchen durch das Magnetfeld des Solarwindes teilweise in den Raum reflektiert werden. In 12km Flughöhe ändert sich die Dosisleistung infolge des Sonnenzyklus um etwa 20%.

Die auftreffenden Protonen werden in den obersten Schichten der Atmosphäre abgebremst und erzeugen dabei ein breites Spektrum von Sekundärteilchen wie Protonen (Gammastrahlung), Elektronen, Myonen sowie Neutronen. Die räumliche Verteilung des Protonenfeldes ist stark vom magnetischen Erdfeld abhängig und damit von der geographischen Länge und Breite. Der Teilchenfluß nimmt infolge der Abschirmwirkung der Atmosphäre mit zunehmender Höhe zu; ebenso ändert sich das sekundäre Spektrum der Strahlung mit der Höhe. Insgesamt ist somit die Strahlenbelastung von der Höhe des Flugzeuges sowie dessen geographischen Länge und dessen geographischer Breite abhängig.

Für die Berechnung der spektralen Zusammensetzung der auftretenden Gesamtstrahlung in Abhängigkeit der geographischen Position und der Höhe wurden spezielle Algorithmen gebildet; als erste Näherung kann man für eine Flughöhe von 10km eine Dosisleistung von ca. 8 bis 10µSv/h annehmen.

In Zeiten erhöhter Sonnenaktivität (solare Zyklen) können jedoch sogenannte "Solar flares" auftreten, zeitlich begrenzte Zonen erhöhter Strahlungsintensität, die bis zum hundertfachen über dem obigen galaktischen Wert liegen können. Diese gelegentlichen Eruptionen dauern meist einige Minuten und können nicht vorhergesagt werden. Ein Maximum aus dem Jahre 1956 lag z.B. bei 10 mSv/h in 12 km Höhe. Im Schnitt ist für ein derartiges Ereignis ein Wert von ca. 100 µSv/h anzusetzen. Seit 1956 sind eine Anzahl derartiger Flares mit einer Dosisleistung von über 100 µSv/h beobachtet worden.

Aus der Teilchenfluenz der kosmischen Strahlung kann die Energiedosis im Gewebe errechnet werden. Die biologisch wirksame Effektivdosis wird durch Anwendung eines Strahlungswichtungsfaktors aus der Energiedosis gewonnen. Dieser Faktor variiert je nach Teilchenart und -energie von 1 bis 20. Durch Änderungen dieser Faktoren aufgrund der Empfehlung der internationalen Strahlenschutzkommission wird der von Neutronen herrührende Anteil an der Effektivdosis nunmehr um ca. 60% höher bewertet als bisher.

Man kann davon ausgehen, daß die Strahlenbelastung des Flugpersonals durch deren Aufenthalt in der Reiseflughöhe je nach Flugstrecke und Anzahl der Blockstunden (Flugstunden in Reiseflughöhe) im Bereich von 5 bis 10 mSv/Jahr liegt. Damit liegt sie deutlich über der mittleren Jahresdosis der beruflich strahlenbelasteten Personen in Österreich (ca. 1,5 mSv/Jahr), jedoch unter der Hälfte des zukünftigen Grenzwertes für beruflich strahlenexponierte Personen von 20 mSv/Jahr gemäß der Empfehlung der internationalen Strahlenschutzkommission (ICRP60).

Die tatsächliche Strahlenbelastung des Flugpersonals in zivilen und militärischen Flugzeugen kann prinzipiell durch aktive d.h. direkt anzeigende oder durch passive d.h. integrierende Dosimeter ermittelt werden. Es kann davon ausgegangen werden, daß Ortsdosimeter an Bord anstelle von individuellen Personendosimetern ausreichen, wobei die Zuordnung zur Personendosis über die Flugeinsatzpläne erfolgt. Als aktive Dosimeter kommen im Prinzip gewebeäquivalente Proportionalzähler (TEPC) in Frage, die sich hinsichtlich Meßgenauigkeit und Energieunabhängigkeit als gut einsetzbar gezeigt haben. In der Praxis sind sie jedoch aufgrund ihrer kurzen Lebensdauer und geringen Betriebssicherheit abgesehen von hohen Kosten für den Routinebetrieb wenig geeignet.

Ein erprobtes, allerdings sehr aufwendiges Verfahren wird in der französischen und britischen Luftfahrt für die Concorde verwendet. Es werden alle einfallenden Teilchen mit jeweils spezifischen Gamma und Neutronendedektoren gemessen und anschließend mit den entsprechenden Qualitätsfaktoren verknüpft und damit die entsprechende Energiedosis im Gewebe berechnet. Hier können die Dosis und die Dosisleistungswerte im Cockpit abgelesen werden und Warnungen bei höheren Dosisleistungen erfolgen.

Passive Dosimeter wie Thermolumineszenzdosimeter haben den Vorteil wesentlich geringeren Aufwandes, sind robust, platzsparend und unabhängig von einer Energieversorgung, jedoch geben sie die akkumulierte Dosis erst retrospektiv an.

Das Hauptproblem liegt jedoch in der sofortigen Interpretation der Meßwerte unter den extrem schwierigen Meßbedingungen des vorliegenden gemischten Strahlenfeldes mit einem vorwiegenden Anteil hochenergetischer Korpuskularstrahlung wie sie insbesondere in größeren Höhen aufzufinden ist.

Die Erfindung setzt sich zum Ziel, hier Abhilfe zu schaffen und eine Anordnung zu schaffen, die als aktives Dosimeter eine sofortige und kontinuierliche Messung und Anzeige mit honer Meßgenauigkeit und Energieunabhängigkeit bei der Messung der Strahlenbelastung bietet. Gleichzeitig soll die Messung und die Auswertung der Meßergebnisse einfach, genau und rasch erfolgen.

Erfindungsgemäß wird die bei einem Verfahren der eingangs genannten Art durch die im Kennzeichen des Patentanspruches 1 angeführten Merkmale erreicht. Bei einer erfindungsgemäßen Anordnung der eingangs genannten Art wird dies durch die im Kennzeichen des Patentanspruches 4 angeführten Merkmale erreicht.

Erfindungsgemäße vorteilhafte Ausführungsformen und Weiterbildungen der Erfindung sind der folgenden Beschreibung und den abhängigen Ansprüchen zu entnehmen.

Die erfindungsgemäße Vorgangsweise besteht nunmehr darin, die von der im Flugzeug auftretenden Gammastrahlung verursachte Dosis(leistung) an Bord mittels eines an sich bekannten relativ einfachen Gammadosisleistungsmeßsystems, insbesondere auf der Basis von Geiger-Müller-Zählrohren, zu messen und gleichzeitig mittels eines geeigneten, an sich bekannten Algorithmus in Abhängigkeit von der geographischen Position (geomagnetische Breite und Länge) sowie der momentanen Flughöhe die spektrale Zusammensetzung der kosmischen Strahlung am Ort des Flugzeuges zu berechnen. Es wird ein Anteilsfaktor ermittelt, der den Beitrag der Neutronenstrahlung (bzw. den Anteil der übrigen Komponenten) der kosmischen Strahlung zu der gesamten Effektiväquivalenzdosis angibt. Dieser Beitrag der Neutronenstrahlung zum Gesamtspektrum der Strahlung verändert sich in gewissem Ausmaß in Abhängigkeit von der Höhe sowie der geographischen Position und wird durch den Algorithmus berechnet und durch Anteilsfaktoren, die gespeichert am Flugzeug mitgeführt werden und von der Höhe und geographischen Position abhängig sind, ermittelt bzw. vorgegeben.

Mit diesem ortsabhängigen Anteilsfaktor wird sodann die gemessene Gammadosis(leistung) multipliziert, um die tatsächliche (Äquivalenz)Dosis(leistung) zu ermitteln.

Zur automatischen Bestimmung der Flughöhe und der geographischen Position wird vorzugsweise ein eigener an sich bekannter GPS-Empfänger-(global positioning system) verwendet; damit kann eine Positions-und Flughöhenbestimmung ohne Eingriff in das Navigationssystem des Flugzeuges erfolgen.

Bei der erfindungsgemäßen Vorgangsweise wird somit ein Meßwert W mit einem Dosis(leistungs)-Meßsystem an Bord des Flugzeuges ermittelt. In einem Rechner bzw. in einem Speicher des Rechners werden, bezogen auf Höhe und/oder geographische Position Anteilsfaktoren mitgeführt (oder gemäß einem Algorithmus berechnet), welche den Anteil der jeweils gemessenen Strahlung an dem gesamten Spektrum der Höhenstrahlung angeben. Diese Anteilsfaktoren A berechnen sich beispielsweise durch eine Division der Dosis des Gesamtspektrums Q gesamt durch die Dosis Q_{N} der jeweils gemessenen Strahlung (A=Q gesamt/Q_{N}).

Der im Rechner sodann berechnete Wert W.A entspricht sodann der tatsächlichen (Äquivalent)Dosis(leistung) im Flugzeug.

Anstelle einer Messung der Gammastrahlung kann auch eine Messung der Neutronenstrahlung oder von Protonen usw. erfolgen.

Die erfindungsgemäße Vorgangsweise hat den Vorteil, daß die Dosisermittlung auf einem tatsächlichen bzw. echten Meßwert basiert, bzw. auf einer Strahlungskomponente, insbesondere Gammastrahlungskomponente, beruht, sodaß z.B. Solar flares und andere nicht vorhersehbare Änderungen der Strahlung gegenüber von erwarteten Gesamtdosiswerten mitberücksichtigt werden. Es wird ein einfacher, robuster und wenig aufwendiger Strahlungsdedektor für Gammastrahlung, z.B. mit zwei Geiger-Müller-Zählrohren verwendet und die Ermittlung des von der orts- und höhenabhängigen spektralen Zusammensetzung bestimmten Anteilsfaktors kann durch eine Berechnung mittels Rechnern unschwer erfolgen.

Damit wird ein relativ einfaches, genaues Meßsystem für die Strahlenbelastung des Flugpersonals realisiert, das abgesehen von der Stromversorgung autark und unabhängig vom Navigationssystem des Flugzeuges ist, sodaß die Gefahr von Rückwirkungen von vornherein ausgeschlossen werden kann.

Der Rechner kann einen Speicher zur Speicherung der Dosiswerte in Echtzeit aufweisen, sodaß die gesamte tatsächliche Strahlenbelastung für den Flug jederzeit abgefragt und aufgrund der Flugeinsetzpläne EDV-mäßig dem jeweiligen Flugpersonal zugeordnet werden kann.

Ferner ist es möglich, bei Bedarf eine Anzeige der jeweils herrschenden Dosisleistung im Cockpit vorzusehen und damit auch eine Warnung bei außergewöhnlich hoher Dosis(leistung), z.B. während Solar flares, zu verbinden, sodaß der Pilot gegebenenfalls in eine niedrigere Flughöhe wechseln kann, in der eine geringere Dosisleistung herrscht.

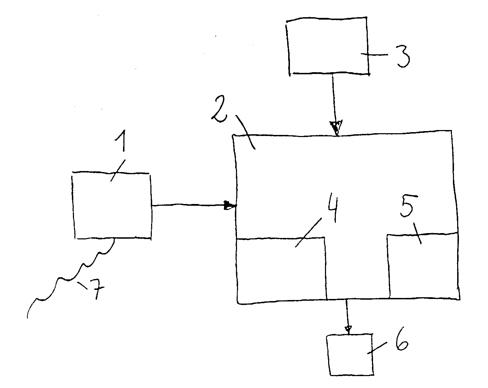

Ein Ausführungsbeispiel einer erfindungsgemäßen Anordnung wird im folgenden anhand der Zeichnung näher erläutert. Mit 1 ist ein Dosisleistungsmeßsystem bezeichnet, dessen Ausgangssignal einem Rechner bzw. einer Verarbeitungseinheit 2 zugeführt ist. In der Verarbeitungseinheit bzw. dem Rechner 2 ist ein Speicher 4 für einen Algorithmus oder für Anteilsfaktoren enthalten. Ferner umfaßt der Rechner 2 einen Speicher 5 für die errechneten Dosiswerte. An den Rechner angeschlossen ist eine Anzeigeeinrichtung bzw. Warneinrichtung 6 an der die Dosis ablesbar ist. Ferner ist an den Rechner 2 eine Einrichtung 3 angeschlossen, mit der die jeweilige Flughöhe und geographische Position des Flugzeuges bestimmbar ist. In Abhängigkeit von den Meßwerten dieser Einrichtung 3 werden die Anteilsfaktoren aus dem Speicher 4 dem Rechner 2 zur Verfügung gestellt bzw. der Algorithmus zur Berechnung der Anteilsfaktoren wird entsprechend abgewickelt bzw. werden die Meßwerte des Meßsystems 1 mitverarbeitet.

Da der Algorithmus betreffend den Zusammenhang zwischen der Höhe und der geographischen Position relativ umfangreiche Rechenoperationen voraussetzt, kann bei einer bevorzugten Ausführungsform der Erfindung vorgesehen werden, daß nicht der Algorithmus im Rechner mitgeführt wird, sondern daß im Rechner bereits in Listenform bzw. in gespeicherter Form abhängig von der Höhe und der geographischen Position ermittelte Anteilsfaktoren mitgeführt werden, mit denen die an den jeweiligen geographischen Positionen und in der jeweiligen Höhe ermittelten Meßwerte der gemessenen Strahlungsart multipliziert werden müssen, um die Gesamtdosis (leistung) an dieser Stelle zu ermitteln. Eine Multiplikation des Meßwertes an der jeweiligen Position mit diesem Anteilsfaktor ergibt somit die Gesamtdosis der tatsächlich zu diesem Zeitpunkt und an dieser Position auftretenden Strahlung. Die Anteilsfaktoren können dabei für geographische Gebiete z.B. für Flächenbereiche Ausmaß von 10x10 km und/oder für Höhenschichten einer Decke von z.B. 1 km angegeben werden.

Eine weitere Alternative könnte darin bestehen, daß die Anteilsfaktoren nicht für die gesamte Erdoberfläche mitgeführt werden, sondern z.B. für die nördliche oder die südliche Halbkugel oder auch nur für eine bestimmte Flugroute unter Berücksichtigung allfälliger Ausweichrouten im Falle Schlechtwetters us.

Prinzipiell kann die Auswertung der Meßsignale und ihre Verknüpfung mit den Anteilsfaktoren auch in analoger Vorgangsweise erfolgen.

Die Messung der Dosis wird somit insbesondere zentral für das gesamte Flugzeug an einer einzigen Stelle durchgeführt. Das Ergebnis gilt somit für alle mitgeführten Passagiere.

## Patentansprüche

1. Verfahren zur Ermittlung der Strahlenbelastung oder der Dosis oder der Dosisleistung der in Flugzeugen herrschenden Strahlung mit Hilfe einer Strahlungsmeßeinrichtung (1), mit der die Äquivalentdosis oder Äquivalentdosisleistung oder Dosis oder Dosisleistung einer einzelnen Strahlungsart, z.B. Gammastrahlung oder Neutronenstrahlung, aktiv gemessen wird, und mit Hilfe eines Rechners (2), der an die Strahlungsmeßeinrichtung (1) angeschlossen ist,
dadurch gekennzeichnet,
- daß die an einer einzigen Stelle für das gesamte Flugzeug gemessene Äquivalentdosis oder Äquivalentdosisleistung oder Dosis oder Dosisleistung dieser einzelnen, aktiv gemessenen Strahlungsart mit einem Konversionsfaktor zur Ermittlung der gesamten Strahlungsbelastung multipliziert wird,
- daß dieser Konversionsfaktor mit Hilfe eines Algorithmus ermittelt wird oder wurde, der den Zusammenhang zwischen der Flughöhe sowie der geographischen oder geomagnetischen Länge und Breite und der spektralen Zusammensetzung der belastenden Strahlung oder die Anteile der einzelnen Strahlungsarten an dem örtlich erwarteten Gesamtspektrum angibt
- und daß das berechnete Produkt als tatsächliche Äquivalentdosis oder Äquivalentdosisleistung oder Dosis oder Dosisleistung angezeigt und/oder ausgewertet und/oder gespeichert wird.

2. Verfahren nach Anspruch 1, dadurch gekennzeichnet, daß am Flugzeug die von der Höhe sowie von der geographischen oder geomagnetischen Position abhängigen Anteilsfaktoren in Form von für vorbestimmte Höhenbereiche und/oder vorbestimmte abgegrenzte geographische Bereiche gültige Konversionsfaktoren ermittelt oder in gespeicherter Form mitgeführt werden.

3. Verfahren nach Anspruch 1 oder 2, dadurch gekennzeichnet, daß die Höhe und/oder die geographische Position unabhängig von der Navigationseinrichtung des Flugzeuges, vorzugsweise mit Hilfe eines GPS-Systems-(global positioning system), ermittelt wird.

4. Anordnung zur Ermittlung der Strahlenbelastung oder der Dosis oder der Dosisleistung der in einem Flugzeug herrschenden Strahlung mit einem aktiven Dosis- oder Dosisleistung-Meßgerät (1) zur Messung einer einzigen bestimmten Strahlenart, z.B. Gamma- oder Neutronenstrahlung, einem an das Meßgerät (1) angeschlossenen Rechner (2) und gegebenenfalls einer Anzeigeeinheit (6), insbesondere zur Durchführung des Verfahrens nach einem der Ansprüche 1 bis 3,
dadurch gekennzeichnet,
- daß der Rechner (2) zur Multiplikation des der Äquivalentdosis oder Äquivalentdosisleistung oder Dosis oder Dosisleistung dieser einzelnen aktiv gemessenen Strahlungsart entsprechenden Meßsignals oder Meßwertes des Meßgerätes (1) mit einem Konversionsfaktor eingerichtet ist bzw. als Multiplikationseinrichtung dafür fungiert, welcher Konversionsfaktor mit Hilfe eines Algorithmus ermittelbar ist, der die von der Flughöhe sowie von der geographischen oder geomagnetischen Länge und Breite abhängige spektrale Zusammensetzung der belastenden Strahlung oder den Anteil der jeweiligen Strahlungsart an dem örtlich erwarteten Gesamtspektrum wiedergibt,
- daß der Algorithmus und/oder bereits ermittelte Konversionsfaktoren im Speicher (4) des Rechners (2) im Flugzeug mitgeführt sind
- und daß das der Strahlenbelastung oder der Dosis oder der Dosisleistung entsprechende Rechenergebnis im Rechner (2) speicherbar und/oder an einer angeschlossenen Anzeigeeinheit (6) anzeigbar ist.

5. Anordnung nach Anspruch 4, dadurch gekennzeichnet, daß als Dosis- oder Dosisleistungs-Meßgerät (1) für Gammastrahlen Geiger-Müller-Zählrohre, Szintillationszähler oder lonisationskammern vorgesehen sind oder daß BF3-Zählrohre zur Messung von Neutronen vorgesehen sind.

6. Anordnung nach Anspruch 4 oder 5, dadurch gekennzeichnet, daß eine von der Navigationseinrichtung des Flugzeuges unabhängige Einrichtung (3) zur Bestimmung der Höhe und/oder der geographischen oder geomagnetischen Position, vorzugsweise ein GPS-System, an den Rechner angeschlossen ist.

7. Anordnung nach einem der Ansprüche 4 bis 6, dadurch gekennzeichnet, daß in Abhängigkeit von den Signalen des GPS-Systems (3) die Konversionsfaktoren für bestimmte Höhen- und/oder Positionsbereiche aus dem Speicher (4) abrufbar und der Programmabarbeitung zuführbar sind.

8. Anordnung nach einem der Ansprüche 4 bis 6, dadurch gekennzeichnet, daß in Abhängigkeit von den Signalen des GPS-Systems (3) die Berechnung der Konversionsfaktoren mit Hilfe des mitgeführten Algorithmus im Zuge der Programmabarbeitung des Rechners (2) ausgeführt wird.

## Claims

1. Method for measuring the radiation exposure or dose or dose rate of radiation in aircraft by means of a radiation gauge (1), capable of actively measuring the equivalent dose or equivalent dose rate of an individual type of radiation, e.g. gamma-radiation or neutron radiation, using a computer (2) connected to the radiation gauge (1), characterised by the facts
- that the equivalent dose or equivalent dose rate or dose or dose rate of this individual type of radiation, actively measured at one point only for the entire aircraft, is multiplied by a conversion factor in order to determine the total radiation exposure,
- that this conversion factor is or was determined with the help of an algorithm, which specifies the connection between flight altitude and geographic or geomagnetic aircraft is exposed, or the shares of the individual types of radiation in the total spectrum locally expected,
- that the calculated product is displayed and/or evaluated and/or stored as actual equivalent dose or equivalent dose rate or dose or dose rate.

2. Method according to claim 1, characterised by the fact that the factors governing the share of radiation, depending on flight altitude as well as on geographic or geomagnetic position of the aircraft, are determined in form of conversion factors, valid for pre-defined ranges of altitude and/or pre-defined limited geographic areas, or are accessible in the memory.

3. Method according to claims 1 or 2, characterised by the fact that the altitude and/or the geographic position are determined independently from the navigating equipment of the aircraft, preferably by means of a GPS (global positioning system).

4. Configuration for determining the radiation exposure or dose or dose rate of the radiation present in the aircraft by means of an active dose or dose rate measuring gauge (I) for measuring one specified type of radiation, e.g. gamma or neutron radiation, a computer (2) connected to the measuring gauge (1) and, if required, a display unit (6), especially for performing the method according to one of the claims 1 to 3,
characterised by the facts
- that the computer (2) is programmed with a conversion factor for multiplying the measuring signal or measuring value of the measuring gauge (1), corresponding to the equivalent dose or equivalent dose rate or dose or dose rate of this individual actively measured type of radiation, or serves as multiplication device to determine the conversion factor with the help of an algorithm, which reflects the spectral composition of the radiation exposure, dependent on the flight altitude and on the geographic or geomagnetic longitude and latitude, or the share of the individual type of radiation of the total spectrum expected locally,
- that the algorithm and/or any conversion factors already determined are available in the memory (4) of the computer (2) of the aircraft
- and that the computing result corresponding to the radiation exposure or the dose or dose rate is storable in the computer (2) and/or can be shown at a connected display unit (6).

5. Configuration according to claim 4, characterised by the fact that scintillation counters or ionisation chambers are prescribed as dose or dose rate measuring gauges (1) for gamma radiation geiger-mueller-counters, or that BF₃-counters are used for neutron measurement.

6. Configuration according to claims 4 or 5, characterised by the fact that a device, preferably a GPS, independent from the navigation equipment of the aircraft is connected to the computer for determining altitude and/or geographic or geomagnetic position.

7. Configuration according to one of the claims 4 to 6, characterised by the fact that the conversion factors for certain ranges of altitude and/or position, dependent on signals of the GPS (3), can be called from the memory (4) and used for executing the programme.

8. Configuration according to one of the claims 4 to 6, characterised by the fact that the conversion factors, dependent on the signals of the GPS (3), can be calculated using the available algorithm in the course of the programme execution of the computer (2).

## Revendications

1. Méthode pour mesurer l'exposition aux radiations (ou dose ou de la dose de taux de radiation) dans un avion au moyen d'une jauge de mesure capable de mesurer la dose actuelle équivalente ou un taux de dose équivalent d'un type de radiation donnée; par exemple; radiation gamma ou radiation de neutrons, et d'un ordinateur relié à celle-ci. Elle est caractérisée par les éléments suivants:
- la dose équivalente est mesurée en un point de l'avion seulement et est multipliée par un facteur de conversion afin de mesurer l'exposition à la radiation totale.
- ce facteur de conversion est ou a été déterminé à l'aide d'un algorithme qui précise la relation entre l'altitude de vol, les coordonnées géographiques (longitude et latitude) et la composition du spectre de la radiation auquelle l'avion est exposé. Il peut également tenir compte des radiations contenues de parties de types dans la totalité du spectre attendu à cet endroit.
- le produit calculé est affiché ou évalué ou stocké comme la dose équivalente réelle.

2. La procédure relative à la réclamation 1 est caractérisée par le fait que les facteurs gouvernant la part de radiation dépendent de l'altitude et de la position de l'avion. Ils sont aussi calculés selon l'altitude et la position de l'avion. Ils sont accessibles dans la mémoire de l'ordinateur ou calculés à partir de facteurs de conversion liés à des intervalles d'altitude et/ou à des zones géographiques prédéfinies.

3. Procédure relative aux réclamations 1 ou 2 est caractérisée par le fait que l'altitude et/ou la position géographique qui sont déterminées indépendamment du systéme de navigation de l'avion grâce en priorité au système GPS.

4. Dispositif pour déterminer l'exposition aux radiations présentes dans l'avion au moyen:
- d'une dose active ou d'un taux de dose mesuré par la jauge (1). (Mesurer un type de radiation, radiation gamma et neutron)
- d'un ordinateur (2) relié à la jauge de mesure (1)
- et si nécessaire une unité d'affichage (6) spécialement adaptée à l'une des revendications 1 à 3. Ce dispositif est caractérisé par:
un ordinateur (2) relié à la jauge de mesure (1) et si nécessaire, à une unité d'affichage (6) spécialement adaptée à l'une des réclamations 1 à 3.
Cette configuration est caractérisée par:
- l'ordinateur (2) est programmé avec un facteur de conversion qui permet de multiplier le signal mesuré ou la valeur mesurée par la jauge de mesure (1). Cette valeur correspond à une dose équivalente ou à un taux de dose d'un type particulier de radiation déjà mesuré.
L'ordinateur est utilisé comme un dispositif pour déterminer le facteur de conversion grâce à un algorithme.
Cet algorithme reprend la composition du spectre de la radiation qui dépend de l'altitude et de la position de l'avion. Il peut aussi tenir compte de la part de radiation type dans la totalité du spectre attendu.
- l'algorithme et/ou tous les facteurs de conversion déjà calculés sont disponibles dans la mémoire (4) de l'ordinateur (2) de l'avion.
- le résultat calculé correspond à l'exposition à la radiation est stocké dans l'ordinateur (2) et/ou peut être montré par une unité d'affichage (6).

5. La configuration relative à la revendication (4) est caractérisée par le fait que les compteurs de scintillation ou les chambres d'ionisation sont prescrits comme pour les compteurs Geiger Mueller de mesure des radiations gamma. Les compteurs BF₃ sont utilisés pour mesurer les neutrons.

6. La configuration relative aux revendications (4) ou (5) est caractérisée par le fait que le dispositif de préférence GPS et indépendant du système de navigation de l'avion est relié à l'ordinateur qui va calculer l'altitude et la position géographique.

7. Configuration relative à l'une des "revendications" (4) à (6) est caractérisée par le fait que les facteurs de conversion de certains intervalles d'altitude et/ou de position (liés aux signaux du GPS (3) peuvent être appelés dans la mémoire (4) et étreu tilisés pour exécuter le programme.

8. La configuration relative à l'une des revendications de (4) à (6) est caractérisée par le fait que facteurs de conversion liés aux signaux du GPS (3) peuvent être calculés en utilisant l'algorithme di sponible en cours d'exécution du programme de l'ordinateur (2).
